# EUROPÄISCHE PATENTSCHRIFT

(11) **EP 0 988 964 B1**
(45) Veröffentlichungstag und Bekanntmachung des Hinweises auf die Patenterteilung: **04.10.2001**
(21) Anmeldenummer: 99118664.4
(22) Anmeldetag: 22.09.1999
(51) Int. Cl.: B32B 17/10, B32B 33/00

(54) **Spezieller Klebstoffverbund geeignet für einfachen Ausbau**
Special adhesive laminate suitable for easy removal
Stratifié spécial utilisable pour démontage facile

(30) Priorität: 25.09.1998 CH 195398
(43) Veröffentlichungstag der Anmeldung: 29.03.2000
(73) Patentinhaber: Sika AG, vorm. Kaspar Winkler & Co., CH-8048 Zürich (CH)
(72) Erfinder: Merz, Peter W. Dr., 8832 Wollerau (CH); Wirz, Thomas, 8048 Zürich (CH); Burchardt, Bernd Rudi Dr., 8104 Weiningen (CH)
(74) Vertreter: Blum, Rudolf Emil Ernst

(56) Entgegenhaltungen:
- EP-A- 0 244 608
- US-A- 3 900 655
- US-A- 4 358 329
- US-A- 5 126 208

## Beschreibung

Die vorliegende Erfindung betrifft einen Klebstoffverbund, der auf einem speziellen Klebstoffsystem beruht, welches das Trennen des unter Verwendung des Klebstoffsystems hergestellten Klebstoffverbundes erheblich vereinfacht und insbesondere für den schnellen Ausbau von Kunststoffscheiben im Notfall von grossem Nutzen ist.

Mit Klebstoffsystem sind vorliegend alle Materialien gemeint, welche am Verbund von zwei Substraten beteiligt sind. Da in einem geeigneten Klebstoffsystem alle Materialien zueinander eine gute Haftung aufweisen müssen, entsteht bei der Anwendung eines Klebstoffsystems auf Substrate ein Verbund, genauer ein Klebstoffverbund.

Gemäss Stand der Technik wird das Trennen eines Klebstoffverbundes, z.B. im Reparaturfall von Autoscheiben, durch ein Schneiden mittels mechanischen Mitteln, wie z.B. mit einem Vibrationsmesser oder einem Schneidedraht, bewerkstelligt. In besonderen Fällen muss der Ausbau von Fahrzeugscheiben sehr schnell erfolgen, wie z.B. bei Busscheiben, die in einem Notfall mit dem Hammer eingeschlagen werden, um den Passagiere den schnellen Ausstieg zu ermöglichen.

Diese Busscheiben aus Glas möchte man aus Gewichtsgründen und aufgrund von Sicherheitsüberlegungen, d.h. kein Splittern bei einem Scheibenbruch, durch Kunststoff ersetzen.

Da solche Kunststoffscheiben (= KS-Scheiben) nicht mit mechanischen Mitteln, z.B. mittels Hammer, leicht zertrümmert werden können, ist ein Klebstoffsystem erforderlich das ein einfaches und schnelles Trennen des Verbundes, d.h. ein einfaches und schnelles Heraustrennen der Scheiben, ermöglicht. Auch zur Vereinfachung der stofflichen Wiederverwertung ist eine Vereinfachung der Trennung eines Klebeverbundes wünschenswert.

Das Schneiden des Klebstoffverbundes mit dem Vibrationsmesser oder dem Schneidedraht ist im Notfall ungeeignet. Im Notfall ist es zwingend erforderlich, dass die Kunststoffscheiben von den Passagieren vom Fahrzeuginnenraum her ausgebaut werden können. Dies ist aufgrund des im Busbau üblichen grossflächigen Klebstoffverbundes mit einer Breite von bis zu 5 cm nur schwer möglich.

Ziel der vorliegenden Erfindung war es deshalb einen Klebstoffverbund bereitzustellen, der auf einem speziellen Klebstoffsystem beruht, das eine rasche Trennung des Klebstoffverbundes ohne Zerstörung mindestens eines Substrates erlaubt, insbesondere ein Klebstoffsystem, das einen Ausbau von mechanisch nicht zerstörbaren Kunststoffscheiben, z.B. in Bussen, von jedermann leicht und von einer Seite, z.B. vom Fahrzeuginnenraum her, erlaubt und zudem wirtschaftlich ist, sowie Verfahren zur Herstellung eines solchen Verbunds und Module zur Verwendung in einem solchen Verfahren.

Das Klebstoffsystem resp. der Klebstoffverbund beruhen auf einem speziellen Aufbau aus Montageklebstoff, organischer Trennschicht und gegebenenfalls Voranstrich (auch Primer genannt), wobei zwischen zwei Montageklebstoffschichten des Verbundes, insbesondere eines Verbunds zwischen den Substraten Kunststoffscheibe und Flansch, eine spezielle polymere Zwischenschicht (Trennschicht) eingebaut ist, mittels derer die beiden Substrate leicht getrennt werden können.

Die Erfindung wird anhand der Figuren weiter veranschaulicht.
Figur 1 zeigt den Aufbau eines erfindungsgemässen Klebstoffverbundes aus Flansch, Klebstoffsystem und Kunststoffscheibe.
Figur 2 zeigt die Veränderung der Trennschicht unter Zugkraftbeanspruchung beim Ausbau der Scheibe in Aufsicht auf die Scheibe.
Figur 3 zeigt die Veränderung der Trennschicht unter Zugkraftbeanspruchung beim Ausbau der Scheibe im Schnitt quer zur Scheibe, ca. entlang der Linie a-a.
Figur 4 zeigt ein erfindungsgemässes Scheibenmodul in Aufsicht (A) und im Schnitt entlang der Linie b-b (B).
Figur 5 zeigt eine weitere Ausführungsform des Scheibenmoduls mit 4 Reissbandstücken, das insbesondere für rascheren Ausbau ausgestattet ist.

In den Figuren bedeuten:
1 = (Kunststoff)scheibe ((KS)-Scheibe)
2 = Montageklebstoff, Schichtstärke ca. 2 mm
3 = organische Trennschicht (Reissband), ca. 2 mm dick
4 = Flansch
5 = Anfassring

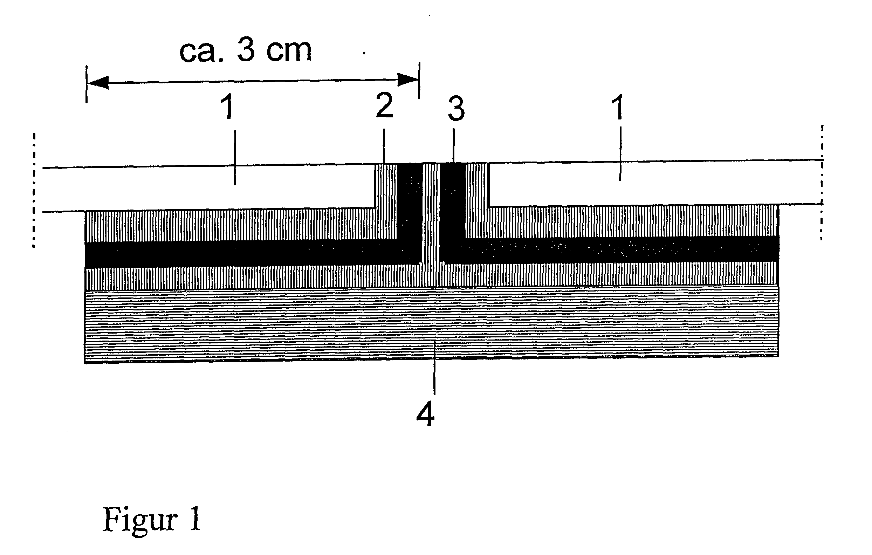

Wie bereits oben erwähnt beruhen das erfindungsgemässe Klebstoffsystem, resp. der Klebstoffverbund (siehe Figur 1) auf einem speziellen Aufbau bei dem zwischen den Substraten 1, 4, insbesondere zwischen einer Kunststoffscheibe 1 und einem Flansch 4, und zwischen zwei Montageklebstoffschichten 2 eine spezielle polymere Zwischenschicht (Trennschicht) 3 eingebaut ist, mittels derer die beiden Substrate leicht getrennt werden können.

Die für den Ausbau notwendige Trennschicht 3 muss ein Elastomer sein, vorzugsweise ein alterungsbeständiges Elastomer, das eine äusserst hohe Bruchdehnung von 500% und mehr, insbesondere von 500 bis über 1500%, besitzt und eine gute Haftung zum Montageklebstoff aufweist.

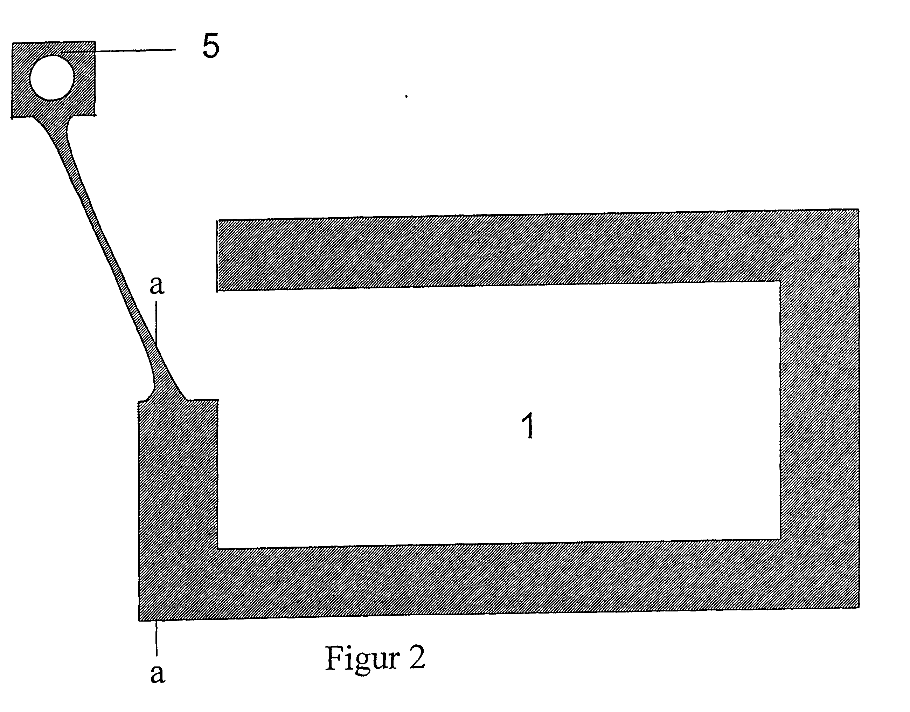

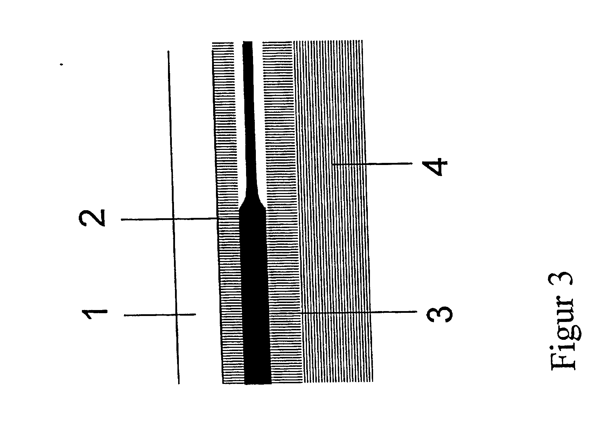

Die alterungsbeständige Elastizität der Trennschicht 3 muss sehr hoch sein, damit sich die Trennschicht beim Strecken derart einschnürt, dass sie sich durch die dabei entstehenden Spannungen vom Klebstoff adhäsiv abschälen lässt und somit ein Trennen des Verbundes resultiert (siehe Figuren 2 und 3). Die Trennung erfolgt dadurch, dass die Einschnürung des Reissbandes eine hohe Spannungskonzentration in der Grenzfläche erzeugt und somit eine Trennung des Klebstoffverbundes bewirkt.

Ferner ist eine gute Haftung zwischen der Trennschicht 3 und dem Klebstoff 2 erforderlich, damit ein sicherer Verbund während der gewünschten Zeit, z.B ein sicherer Verbund der Kunststoffscheibe 1 zum Flansch 4 eines Fahrzeuges über die Fahrzeuglebensdauer, garantiert werden kann.

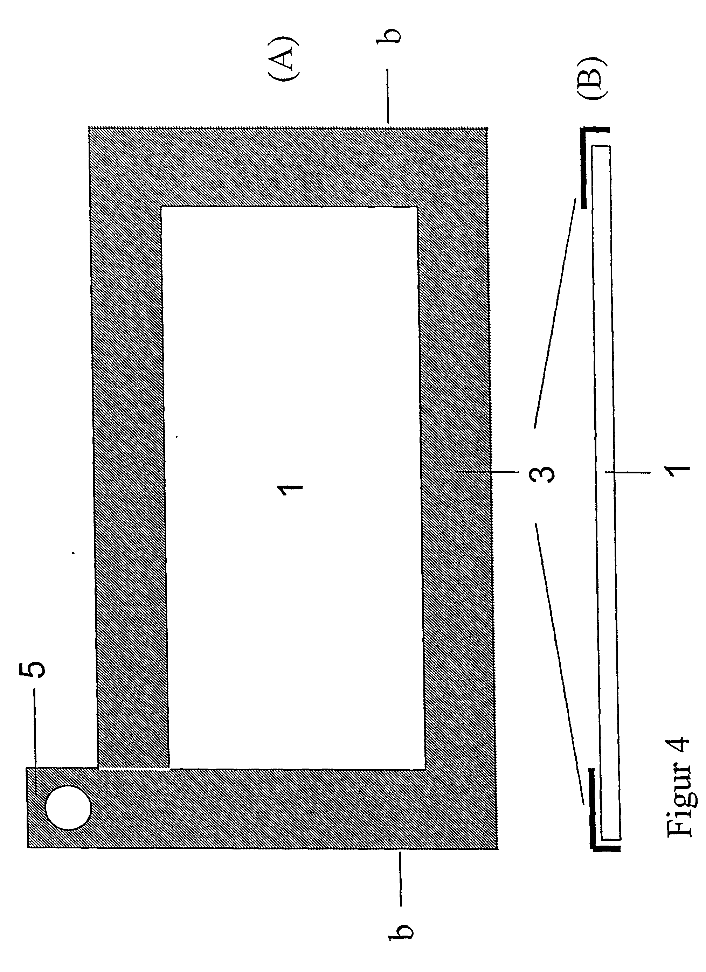

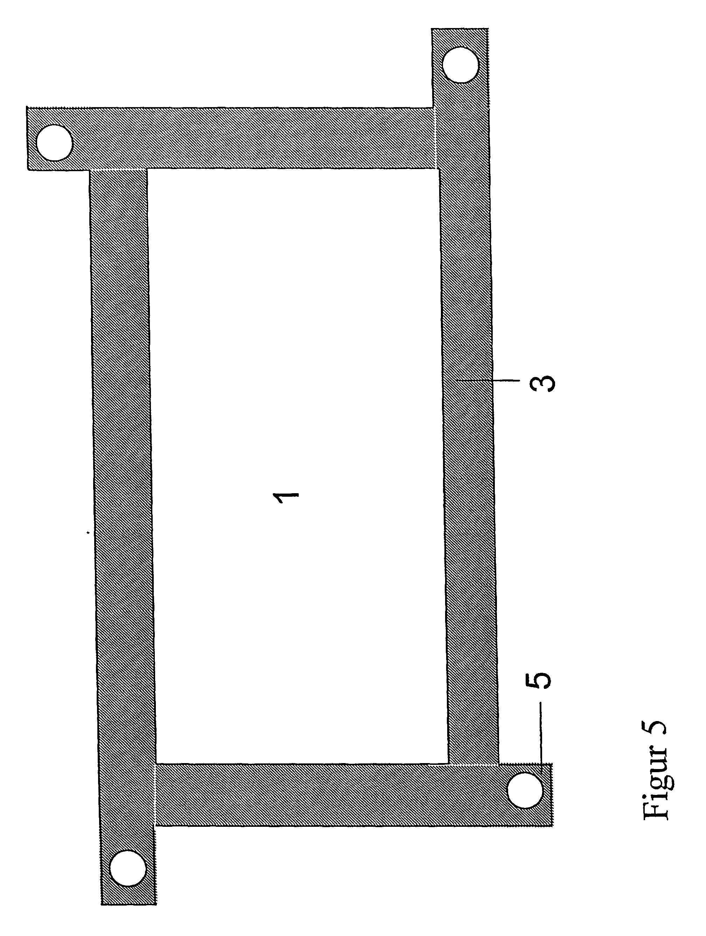

Ein für die Trennschicht geeignetes Material, das den oben erwähnten Anforderungen genügt, ist beispielsweise in den Patentschriften EP 0244608 B1 und US 5342873 beschrieben. Bei diesem handelt es sich um einen bei Raumtemperatur zäh-plastisch verformbaren, feuchtigkeitshärtenden Schmelzklebstoff auf der Basis der Polyurethan-Technologie, d.h. um einen elastischen Polyurethanklebstoff. Dieser kautschukähnliche Schmelzklebstoff kann auf verschiedene Arten verarbeitet werden. Beispielsweise kann er, zur Erleichterung und Beschleunigung der Produktion, mittels einer Presse bei Raumtemperatur zu dem gewünschten Profil(z.B. für die Verklebung von Kunststoff-Scheiben für Busse, Schienenfahrzeuge, Schiffe etc. zu einem L-förmigen Profil) geformt werden und härtet danach mit Luftfeuchtigkeit zu einem hochwertigen, hochzähen und hochelastischen Elastomer aus, das anschliessend gegebenenfalls mit einem der Substrate, z.B. der Scheibe, verklebt wird. Eine andere Möglichkeit besteht darin, dass ein solcher reaktiver Schmelzklebstoff bei Temperaturen um 95 °C mittels Roboter auf eine Trennfolie oder - um die Formstabilität bei komplizierter und für die Standfestigkeit anspruchsvoller Formgebung zu gewährleisten - auf eine Trennform, z.B. aus Teflon, in der gewünschten Dimensionierung aufgebracht und nach der Feuchtigkeitshärtung auf den Substratumfang, z.B. den Kunststoffscheibenumfang, geklebt wird. Entsprechende Ausführungsformen für Scheibenmodule sind in den Figuren 4 und 5 dargestellt.

Für eine rationelle Prozessdurchführung ist es von Vorteil, dass ein Kunststoffscheibenmodul (siehe Figuren 4 und 5) direkt an die Fertigungslinie beim Fahrzeugbauer geliefert wird.

Für die Verklebung der Trennschicht 3 zur Kunststoffscheibe 1, welche vorteilhaft vorgängig beim Zulieferer durchgeführt wird, und für die Montage des Kunststoffscheibenmoduls an den Fahrzeugflansch 4 können wie bisher einkomponentige, auf dem Markt erhältliche Polyurethan-Klebstoffe, wie z.B. mittel- bis hochmodulige Sikaflex® -Produkte, der Sika AG, Zürich, Schweiz, verwendet werden.

Ein wesentlicher Aspekt ist der genau ausbalancierte Haftungsaufbau zwischen dem Klebstoff und der Trennschicht, der so gestaltet werden muss, das einerseits die Haftfestigkeit unter allen üblichen Beanspruchungen über die Fahrzeuglebensdauer garantiert, andererseits durch gezielten Adhäsionsbruch zwischen den Schichten der Ausbau mit definiertem Kraftaufwand ermöglicht wird. Hierzu kann bei der Herstellung des erfindungsgemässen Kunststoffscheibenmoduls die Verwendung von Voranstrichen sinnvoll sein, welche einerseits förderlich für die Haftung sind und andererseits aufgrund ihrer im Vergleich zur Trennschicht und zum bevorzugten Polyurethanklebstoff ausgeprägten Sprödigkeit das Ablösen der Trennschicht vom Klebstoff beim Ausbau begünstigen.

Damit die Kunststoffscheibe schneller durch die in Not geratenen Passagiere mit Hilfe der Trennschicht ausgebaut werden kann, kann das am Rand der Kunststoffscheibe aufgebrachte Trennband in mehrere Abschnitte, z.B. für jede Kante ein Reissbandstück, unterteilt werden (siehe Figur 5).

Es kann auch gezielt an einem herausstehenden Ende ein das Ziehen erleichterndes Mittel, z.B. ein Griff oder Ring, angebracht werden, der das Anfassen und notwendige Ziehen auch für ungeübte Personen ermöglicht.

Die Erfindung wurde oben anhand der Figuren 1 bis 5 näher erläutert. Diese sollen die Erfindung weiter veranschaulichen, den Umfang der Erfindung aber in keiner Weise beschränken. Verschiedene Ausführungsformen sindmöglich, und es kommen alle in Betracht, welche ein einfaches Trennen zweier Substrate mittels einer solchen polymeren Trennschicht, insbesondere das Ausbauen einer Kunststoffscheibe durch nichtausgebildete Personen vom Fahrzeuginnenraum her, erlauben.

## Patentansprüche

1. Klebstoffverbund, **dadurch gekennzeichnet, dass** sich zwischen zwei Substraten zwei Modulklebstoffschichten befinden, zwischen denen eine Trennschicht aus elastischem Material über die gesamte Fugengeometrie eingebaut ist.

2. Klebstoffverbund gemäss Anspruch 1, **dadurch gekennzeichnet, dass** die Trennschicht eine hohe Bruchdehnung von 500 bis über 1500% aufweist.

3. Klebstoffverbund gemäss Anspruch 1 oder 2, **dadurch gekennzeichnet, dass** die Trennschicht ein hochelastischer Polyurethanklebstoff ist.

4. Klebstoffverbund gemäss einem der Ansprüche 1 bis 3, **dadurch gekennzeichnet, dass** die Trennschicht ein Hilfsmittel aufweist, das das Fasen der Trennschicht und damit das Anbringen von Zugkraft auf die Trennschicht verbessert, insbesondere einen Griff oder einen Ring.

5. Klebstoffverbund gemäss einem der Ansprüche 1 bis 4, **dadurch gekennzeichnet, dass** er zusätzlich mindestens eine Schicht mindestens eines Voranstrichs (Primers) zwischen mindestens einer Modulklebstoffschicht und der Trennschicht aufweist.

6. Klebstoffverbund gemäss einem der Ansprüche 1 bis 5, **dadurch gekennzeichnet, dass** die zwei Substrate ein Flansch und eine Kunststoffscheibe sind.

7. Modul für die Herstellung eines Klebsoffverbunds gemäss einem der Ansprüche 1 bis 6, **dadurch gekennzeichnet, dass** es im Randbereich eines Substrates eine Klebstoffschicht und darauf eine Trennschicht aus elastischem Material aufweist.

8. Modul gemäss Anspruch 7, **dadurch gekennzeichnet, dass** das Substrat eine Kunststoffscheibe ist.

9. Modul gemäss Anspruch 7 oder 8, **dadurch gekennzeichnet, dass** die Trennschicht eine auf den Rand-bereich angepasste Trennschicht, insbesondere ein Trennschichtprofil, ist.

10. Verfahren zur Herstellung eines Moduls gemäss einem der Ansprüche 7 bis 9, **dadurch gekennzeichnet, dass** auf den Umfang eines Substrates zuerst eine Klebstoffschicht und anschliessend eine Trennschicht aufgebracht wird.

11. Verfahren zur Herstellung eines Klebstoffverbundes gemäss einem der Ansprüche 1 bis 6, **dadurch gekennzeichnet, dass** zuerst mittels einer Klebstoffschicht eine Trennschicht auf den Umfang eines Substrats aufgeklebt wird, so **dass** ein Modul gemäss einem der Ansprüche 6 bis 8 entsteht, das entweder sofort oder nach Zwischenlagerung und/oder Transport weiterverarbeitet werden kann, und **dass** entweder auf dieses Modul oder ein zweites zu verklebendes Substrat eine zweite Klebstoffschicht aufgebracht und das zweite Substrat und das Modul mittels dieser zweiten Klebstffschicht miteinander verklebt werden.

12. Verfahren zum Zerstören des Klebstoffverbunds gemäss einem der Ansprüche 1 bis 6, **dadurch gekennzeichnet, dass** das elastische Material gestreckt wird, so **dass** es sich von den Klebstoffschichten abschält und somit zu einem Trennen des Klebstoffverbundes führt.

## Claims

1. Adhesive compound, **characterised in that** between two substrates, two layers of modular adhesive are located between which a parting layer made of elastic material is installed over the whole geometry of the joint.

2. Adhesive compound according to claim 1, **characterised in that** the parting layer has a high elongation at break from 500 up to more than 1500 %.

3. Adhesive compound according to claim 1 or 2, **characterised in that** the parting layer is a highly elastic polyurethane adhesive.

4. Adhesive compound according to one of the claims 1 to 3, **characterised in that** the parting layer comprises an auxiliary means which improves the grasping of the parting layer and therefore the application of a tractive force to the parting layer, in particular a handle or a ring.

5. Adhesive compound according to one of the claims 1 to 4, **characterised in that**, in addition, it has at least one layer of at least one primer between at least one layer of modular adhesive and the parting layer.

6. Adhesive compound according to one of the claims 1 to 5, **characterised in that** the two substrates are a flange and a plastic pane.

7. Module for the manufacturing of an adhesive compound according to one of the claims 1 to 6, **characterised in that** it comprises an adhesive layer located in the edging area of a substrate and thereupon a parting layer made of elastic material.

8. Module according to claim 7, **characterised in that** the substrate is a plastic pane.

9. Module according to claim 7 or 8, **characterised in that** the parting layer is a parting layer tailorized to the edging area, in particular a parting layer profile.

10. Method for manufacturing a module according to one of the claims 7 to 9, **characterised in that** on the circumference of a substrate, first an adhesive layer and afterwards a parting layer is applied.

11. Method for manufacturing an adhesive compound according to one of the claims 1 to 6, **characterized in that** first a parting layer is sticked onto the circumference of a substrate by means of an adhesive layer such that a module according to one of the claims 6 to 8 is formed that can be further processed either immediately or after intermediate stocking and/or transportation and that either on this module or on a second substrate to be sticked, a second adhesive layer is applied and the second substrate and the module are sticked together by means of said second adhesive layer.

12. Method for destroying the adhesive compound according to one of the claims 1 to 6, **characterised in that** the elastic material is stretched such that it peels off from the adhesive layers and thus leads to a disconnection of the adhesive compound.

## Revendications

1. Stratifié collé, **caractérisé en ce qu'**entre deux substrats se trouvent deux couches de colle modulaires entre lesquelles une couche de séparation en matière élastique est insérée sur toute la géométrie de joint.

2. Stratifié collé selon la revendication 1, **caractérisé en ce que** la couche de séparation présente un fort allongement à la rupture de 500 à plus de 1500 %.

3. Stratifié collé selon la revendication 1 ou 2, **caractérisé en ce que** la couche de séparation est une colle au polyuréthanne hautement élastique.

4. Stratifié collé selon une des revendications 1 à 3, **caractérisé en ce que** la couche de séparation présente un accessoire qui améliore la prise sur la couche de séparation et donc l'application d'une force de traction sur la couche de séparation, en particulier une poignée ou un anneau.

5. Stratifié collé selon une des revendications 1 à 4, **caractérisé en ce qu'**il présente en outre au moins une couche d'au moins une couche de fond (primer) entre au moins une couche de colle modulaire et la couche de séparation.

6. Stratifié collé selon une des revendications 1 à 5, **caractérisé en ce que** les deux substrats sont une flasque et une plaque en matière synthétique.

7. Module pour la fabrication d'un stratifié selon une des revendications 1 à 6, **caractérisé en ce qu'**il présente dans la région du bord d'un substrat une couche de colle et dessus une couche de séparation en matière élastique.

8. Module selon la revendication 7, **caractérisé en ce que** le substrat est une plaque en matière synthétique.

9. Module selon la revendication 7 ou 8, **caractérisé en ce que** la couche de séparation est une couche de séparation adaptée sur la région du bord, en particulier un profil de couche de séparation.

10. Procédé pour la fabrication d'un module selon une des revendications 7 à 9, **caractérisé en ce que** sur la périphérique d'un substrat, une couche de colle est d'abord appliquée et ensuite une couche de séparation.

11. Procédé pour la fabrication d'un stratifié collé selon une des revendications 1 à 6, **caractérisé en ce que** une couche de séparation est tout d'abord collée sur la périphérie d'un substrat au moyen d'une couche de colle afin qu'il en résulte un module selon une des revendications 6 à 8, lequel peut être traité ultérieurement soit tout de suite soit après entreposage et / ou transport, et **en ce que** une deuxième couche de colle est appliquée soit sur ce module soit sur un deuxième substrat à coller et le deuxième substrat et le module sont collés ensemble au moyen de cette deuxième couche de colle.

12. Procédé pour démolir le stratifié collé selon une des revendications 1 à 6, **caractérisé en ce que** la matière élastique est étirée afin qu'elle se pèle des couches de colle et conduise ainsi à une séparation du stratifié collé.
